# EUROPÄISCHE PATENTSCHRIFT

(11) **EP 1 388 451 B1**
(45) Veröffentlichungstag und Bekanntmachung des Hinweises auf die Patenterteilung: **15.08.2007**
(21) Anmeldenummer: 03010149.7
(22) Anmeldetag: 06.05.2003
(51) Int. Cl.: B60K 15/04, B65D 41/06

(54) **Öleinfülleinrichtung an einer Brennkraftmaschine**
Oil filler cap for combustion engine
Bouchon de remplissage d'huile pour moteur à combustion interne

(30) Priorität: 08.08.2002 DE 10236352
(43) Veröffentlichungstag der Anmeldung: 11.02.2004
(73) Patentinhaber: Dr.Ing. h.c. F. Porsche Aktiengesellschaft, 70435 Stuttgart (DE)
(72) Erfinder: Reustle, Albrecht, 74399 Walheim (DE); Gärttling, Marcus, 74081 Heilbronn (DE); Wunsch, Thorsten, 71299 Wimsheim (DE)

(56) Entgegenhaltungen:
- EP-A- 1 092 881
- DE-A- 3 927 325
- GB-A- 2 310 657
- US-A- 4 458 823
- US-A- 4 458 824
- US-A- 5 242 075

## Beschreibung

Bei der Erfindung wird ausgegangen von einer Öleinfülleinrichtung an einer Brennkraftmaschine, gemäß Oberbegriff des Anspruchs 1.

Aus der EP 413 896 A1 ist eine gattungsbildende Öleinfülleinrichtung bekannt, die einen Befüllstutzen mit Einfüllöffnung und einen die Einfüllöffnung verschließenden Verschlussdeckel aufweist, der eine topfförmige Verschlusskappe mit einem Boden und einer umlaufenden Wandung aufweist. An der Innenseite der Kappe entspringt mittig am Boden ein Befestigungsabschnitt, der ein Zentrierelement durchgreift, das am Befestigungsabschnitt durch Rastung gehalten ist. An dem Zentrierelement ist die Dichtung angeordnet, die mit dem die Einfüllöffnung umgebenden Mündungsrand zusammenwirkt. Das Zentrierelement liegt lediglich im Bereich seiner Rastung an dem Befestigungsabschnitt an und außerdem liegt zwischen der Innenseite des Befüllstutzen und dem Zentrierelement nur Linienberührung vor. Dadurch kann im Betrieb der Brennkraftmaschine Öl in größeren Mengen zwischen das Zentrierelement und die Innenseite der Verschlusskappe gelangen.

Aufgabe der Erfindung ist es, eine Öleinfülleinrichtung an einer Brennkraftmaschine anzugeben, bei der der Verschlussdeckel leicht und sauber handhabbar ist.

Gelöst wird diese Aufgabe mit einer Öleinfülleinrichtung, die die in Anspruch 1 genannten Merkmale besitzt. Weitere, die Erfindung ausgestaltende Merkmale sind in den Unteransprüchen angegeben.

Die mit der Erfindung hauptsächlich erzielten Vorteile sind darin zu sehen, dass im Betrieb der Brennkraftmaschine an die Innenseite der Verschlusskappe gelangtes Öl über die umlaufende Abtropfnase wieder zurück in den Befüllstutzen tropfen kann. Durch die schräg verlaufenden Befestigungslappen an dem Haltering bleibt das Öl dort nicht haften und kann zurück in den Befüllstutzen fließen. Somit kann kein Öl abtropfen beim Abnehmen des Verschlussdeckels von der Öleinfüllöffnung, wodurch umliegende Teile an der Brennkraftmaschine, insbesondere die Zylinderkopfhaube, nicht verschmutzt werden. In einigen Fällen wurden so verschmutzte Zylinderkopfhauben oder andere Motorteile bzw. die Verschlusskappe selbst als undicht angesehen, obwohl tatsächlich keine Undichtigkeit vorlag, sondern lediglich beim Abnehmen eines bekannten Verschlussdeckels Öl auf die Brennkraftmaschine getropft ist. Der erfindungsgemäße Verschlussdeckel vermeidet diesen Fehlschluss in vorteilhafter Weise. Überdies wird der Benutzer des Kraftfahrzeugs beim Nachfüllen von Öl geschützt, da sich an dem erfindungsgemäßen Deckel kein Öl ansammeln kann. Durch das flächige Anliegen des Zentrierelements sowohl an der Innenseite des Stutzens als auch an dem Befestigungsabschnitt wird ein Eindringen von Öl weitgehend vermieden.

Eine besonders kostengünstige Ausführungsform des Verschlussdeckels ergibt sich mit den Merkmalen des Anspruchs 4.

Im folgenden wird die Erfindung anhand eines Ausführungsbeispiels mit Bezug auf die Zeichnung näher erläutert.

Es zeigen:
- Fig. 1: einen Verschlussdeckel und einen Befüllstutzen einer Öleinfülleinrichtung in Schnittansicht und
- Fig. 2: eine perspektivische Ansicht eines Halteringes des Verschlussdeckels der Fig. 1.

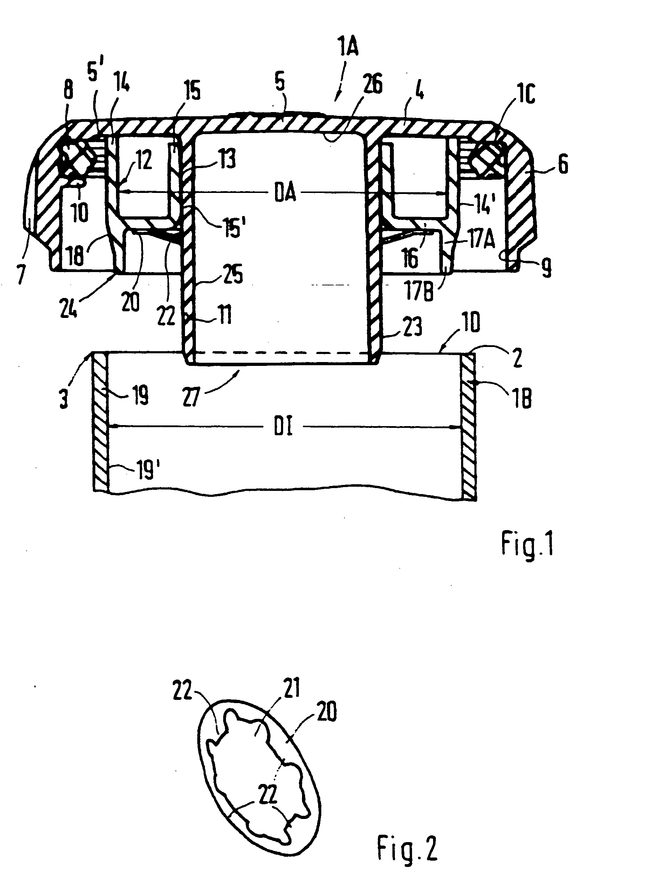

In Fig. 1 ist eine Öleinfülleinrichtung 1A für Schmieröl einer hier nicht weiter dargestellten Brennkraftmaschine gezeigt. Die Öleinfülleinrichtung 1A umfasst einen Befüllstutzen 1B und einen Verschlussdeckel 1C, der auf den Stutzen 1B zum Verschließen seiner Öleinfüllöffnung 1D aufsetzbar ist. Die Öleinfüllöffnung 1D wird von einem Mündungsrand 2 umgeben, der am Ende 3 des rohrförmigen Stutzens 1 B ausgebildet ist, der von einer Zylinderkopfhaube der Brennkraftmaschine ausgehen kann. Die Öleinfüllöffnung 1D wird verschlossen mit dem Verschlussdeckel 1C, der auf den Befüllstutzen 1B aufgesetzt und dort mit einer Befestigungseinrichtung festgelegt wird. Diese hier nicht dargestellte Befestigungseinrichtung kann beispielsweise durch ein an dem Öleinfüllstutzen angebrachtes Außengewinde und ein an dem Verschlussdeckel korrespondierend angebrachtes Innengewinde gebildet sein. Selbstverständlich kann alternativ ein Bajonettverschluss oder eine anderer Rastverschluss oder Klemmverschluss oder dgl. vorgesehen sein.

Der Verschlussdeckel 1C umfasst eine topfförmige Verschlusskappe 4, die somit einen scheibenförmigen Boden 5 sowie eine mit dem Boden 5 endständig verbundene, aufrechte und umlaufende Wandung 6 aufweist, an der ein Angreifformelement 7 zum Drehen des Verschlussdeckels 1C außen angebracht sein kann. Ferner besitzt der Verschlussdeckel 1C eine in die Verschlusskappe 4 eingesetzte ringförmige bzw. umlaufende Dichtung 8, die über wenigstens einen von der Innenseite 9 der Wandung 6 abstehenden Steg 10 abgestützt bzw. an der Verschlusskappe 4 gehalten wird. An der Innenseite 9 der Kappe 4, insbesondere an der Innenseite 9 am Boden 5 ist ein als rohrförmiger Flansch ausgebildeter Befestigungsabschnitt 11 angeordnet, der insbesondere mittig bzw. zentriert an dem Boden 5, also insbesondere koaxial zur umlaufenden Wandung 6 verläuft. An dem Befestigungsabschnitt 11 ist ein Zentrierelement 12 befestigt, das das Aufsetzen des Verschlussdeckels 1C auf den Befüllstutzen 1B erleichtert, weil es den Verschlussdeckel 1C am Mündungsrand 2 ausrichtet. Das Zentrierelement 12 ist also mit seinem Außendurchmesser DA an den Innendurchmesser Dl des Befüllstutzens 1B und somit an die Öffnungsweite der Öleinfüllöffnung 1D angepasst.

Das Zentrierelement 12 ist im Ausführungsbeispiel als hohler Zentrierring ausgebildet, der mit seiner zentralen Ringöffnung 13 auf den rohrförmigen Befestigungsabschnitt 11 aufgesetzt ist, der das Zentrierelement 12 mithin durchgreift. Der Zentrierring ist beispielsweise doppelwandig mit zwei zueinander beabstandeten und parallelen Ringwandungen 14 und 15 versehen, die an ihrem von dem Boden 5 abgewandten Ende über eine Basis 16 verbunden sein können, so dass der Zentrierring im Querschnitt als U - Profil realisiert ist, dessen Profilschenkel durch die Ringwandungen 14 und 15 gebildet und über die Basis 16 verbunden sind, welche Basis 16 mit Abstand zum Boden 5 verläuft, der das U - Profil mithin verschließt. Die Ringwandung 14 liegt mit ihrer Außenumfangsfläche 14' flächig, ggf. abdichtend an der Innenwand 19' des Stutzens 1B an; die Innenumfangsfläche 15' der inneren Ringwandung 15 ist flächig, ggf. abdichtend mit der Außenfläche 23 des Befestigungsabschnitts 11 in Kontakt. Das Zentrierelement 12 wird insbesondere einstückig als Kunststoffteil hergestellt. Ferner ist an dem Zentrierelement 12 ein umlaufender Ringkragen 17A ausgebildet, der sich von der Basis 16 vom Boden 5 weg erstreckt und eine Verlängerung der Ringwandung 15 und deren Fläche 15' bildet. Beispielsweise verläuft der Ringkragen 17A koaxial zum Befestigungsabschnitt 11. An seiner Außenseite 18 kann der Ringkragen 17A in Richtung seines freien Endes 17B konisch zulaufend ausgebildet sein, um ein Aufsetzen des Verschlussdeckels 1C auf den Befüllstutzen 1B zu erleichtern. Vorzugsweise überragt des freie Ende 17B des Ringkragens 17A die Wandung 6 der Kappe 4. Bei auf den Befüllstutzen 1B aufgesetztem Verschlussdeckel 1C kommt die Rohrwandung 19 des Stutzens 1B mit dem Mündungsrand 2 am Ende 3 zwischen der Außenseite 18 des Zentrierrings 12 und der Dichtung 8 zu liegen. Der Mündungsrand 2 kann bei aufgesetztem Deckel 1C am Boden 5 anliegen und/oder in eine am Boden 5 umlaufende Nut 5' eingreifen.

Um das Zentrierelement 12 an der Verschlusskappe 4 zu befestigen, ist ein Haltering 20 (Fig. 2) vorgesehen, der auf den Befestigungsabschnitt 11 aufgeschoben wird, so dass das Zentrierelement 12 mit dem freien Ende einer Ringwandung 14 und/oder 15 gegen die Innenseite 9 am Boden 5 unverlierbar gehalten ist. Selbstverständlich kann das Zentrierelement 12 zusätzlich an der Innenseite 9 mit dem Boden 5 ggf. dichtend verbunden sein, beispielsweise durch Kleben oder Clipsen. Damit der Haltering 20 auf dem Befestigungsabschnitt 11 festgelegt ist, sind um die Halteringöffnung 21 verteilt nach radial innen vorspringende Befestigungslappen 22 vorgesehen, die an der Außenfläche 23 des Befestigungsabschnitts 11 angreifen, insbesondere nach Art eines Widerhakens. Beispielsweise können die Befestigungslappen 22 sich federnd auf dem Befestigungsabschnitt 11 abstützen und/oder sich in das Material des Befestigungsabschnitts 11 eingraben, so dass eine kraft- und/oder formschlüssige Verbindung zwischen Haltering 20 und Befestigungsabschnitt 11 hergestellt wird. Die Befestigungslappen 22 können sich überdies schräg erstrecken, d. h. in Richtung von dem Boden 5 weg ausgerichtet sein. Außerdem ist der Haltering 20 mit einem Außendurchmesser derart versehen, dass er zwischen Ringkragen 17A und Befestigungsabschnitt 11 auf der Basis 16 zu liegen kommt, also innerhalb des Ringkragens 17A angeordnet ist.

Um im Betrieb der Brennkraftmaschine an die Kappeninnenseite 9 gelangendes Öl dort wieder abtropfen zu lassen, wirkt der Ringkragen 17A durch seinen vom Boden 5 weggerichteten axialen Verlauf als Abtropfnase 24. Öl fließt an der Abtropfnase 24 nach unten zum freien Ende 17B und kann von dort in den Stutzen 1B abtropfen. Die Befestigungslappen 22 am Haltering 20 verlaufen unter einem Winkel zur Basis 16, also weggerichtet vom Boden 5, so dass Öl in Richtung des Befestigungsabschnitts 11 fließen und von dort an der Außenfläche 23 entlang in den Stutzen 1B zurückfließen kann. Der Haltering 20 mit seinen Befestigungslappen 22 wird insbesondere einstückig als Blech - Stanz- / Biegeteil beispielsweise aus einem federelastischen Material, insbesondere Stahl einstückig hergestellt.

Um ein Ansammeln von Öl an der Innenseite 25 des Befestigungsabschnitts 11 bzw. an dem vom Befestigungsabschnitt 11 umrandeten Bodenbereich 26 der Kappeninnenseite 9 zu vermeiden, kann des offenen Ende 27 des rohrförmigen Befestigungsabschnittes 11 verschlossen sein.

## Patentansprüche

1. Öleinfülleinrichtung an einer Brennkraftmaschine, mit einem eine Öleinfüllöffnung aufweisenden Befüllstutzen und mit einem Verschlussdeckel zum Verschließen der Einfüllöffnung, wobei der Verschlussdeckel eine topfförmige, einen Boden und eine Wandung aufweisende Verschlusskappe, eine Dichtung und ein mit dem Befüllstutzen zusammenwirkendes Zentrierelement aufweist sowie mittig an dem Boden mit einem als Flansch ausgebildeten Befestigungsabschnitt ausgestattet ist, der das Zentrierelement durchgreift und an dem das Zentrierelement befestigt ist, **dadurch gekennzeichnet, dass** für die Befestigung des Zentrierelements (12) am Befestigürigsabschnitt (11) ein Haltering (20) auf den Befestigungsabschnitt (11) aufgesetzt ist, dass der Haltering (20) an seiner Ringöffnung (21) nach radial innen vorspringende und schräg zum Boden (5) verlaufende Befestigungslappen (22) aufweist, die an dem Befestigungsabschnitt (11) angreifen, dass an dem Zentrierelement (12) eine vom Boden (5) weggerichtet verlaufende Abtropfnase (24) ausgebildet ist und dass das Zentrierelement (12) mit seiner Innenumfangsfläche (15') flächig am Befestigungsabschnitt (11) und mit seiner Außenumfangsfläche (14') flächig an der Innenseite (19') des Stutzens (1B) anliegt.

2. Verschlussdeckel nach Anspruch 1, **dadurch gekennzeichnet, dass** das Zentrierelement (12) als Zentrierring realisiert ist und einen U-förmigen Querschnitt aufweist, wobei ein Profilschenkel der Innenseite (19') des Stutzens (1B) und der andere Schenkel dem Befestigungsabschnitt (11) benachbart ist und die Basis (16) mit Abstand zum Boden (5) liegt.

3. Verschlussdeckel nach Anspruch 1 oder 2, **dadurch gekennzeichnet, dass** der Haltering (20) auf der Basis (16) aufliegt.

4. Verschlussdeckel nach einem der vorhergehenden Ansprüche, **dadurch gekennzeichnet, dass** der Haltering (20) einstückig als Blech - Stanz -/Biegeteil ausgebildet ist.

5. Verschlussdeckel nach einem der vorhergehenden Ansprüche, **dadurch gekennzeichnet, dass** der Haltering (20) innerhalb des Ringkragens (17A) liegt.

6. Verschlussdeckel nach Anspruch 1, **dadurch gekennzeichnet, dass** der Haltering (20) aus Federstahl besteht.

## Claims

1. An oil-filling device on an internal-combustion engine, with a filler neck having an oil-filling opening and with a closing cover for closing the filling opening, wherein the closing cover has a pot-shaped closing cap with a base and a wall, has a seal and a centering member co-operating with the filler neck and is provided in the middle of its base with a fastening portion which is formed as a flange, extends through the centering member and to which the centering member is fastened, **characterised in that** a holding ring (20) is placed over the fastening portion (11) in order to fasten the centering member (12) to the fastening portion (11), **in that** the holding ring (20) is provided in its opening (21) with fastening tabs (22) which project radially inwards and extend at an oblique angle to the base (5) and which engage the fastening portion (11), **in that** a drainage projection (24) directed away from the base (5) is formed on the centering member (12), and **in that** the centering member (12) lies with its inner circumferential surface (15') flat against the fastening portion (11) and with its outer circumferential surface (14') flat against the inner surface (19') of the neck (1B).

2. A closing cover according to claim 1, **characterised in that** the centering member (12) is formed as a centering ring and has a U-shaped cross-section, wherein one profiled arm is adjacent to the inner surface (19') of the neck (1B) and the other arm is adjacent to the fastening portion (11), and the bottom (16) is spaced apart from the base (5).

3. A closing cover according to claim 1 or 2, **characterised in that** the holding ring (20) lies against the bottom (16).

4. A closing cover according to any one of the preceding claims, **characterised in that** the holding ring (20) is formed in one piece as a sheet-metal stamped/bent part.

5. A closing cover according to any one of the preceding claims, **characterised in that** the holding ring (20) lies inside the annular collar (17A).

6. A closing cover according to claim 1, **characterised in that** the holding ring (20) is made of spring steel.

## Revendications

1. Dispositif de remplissage d'huile pour un moteur à combustion interne, avec un raccord de remplissage présentant un orifice de remplissage d'huile et avec un bouchon de fermeture destiné à la fermeture de l'orifice de remplissage, dans lequel le bouchon de fermeture présente un capuchon de fermeture en forme de pot présentant un fond et une paroi, une garniture d'étanchéité et un élément de centrage coopérant avec le raccord de remplissage et est équipé d'une section de fixation réalisée sous forme de bride, centrée sur le fond, ladite section de fixation traversant l'élément de centrage et au niveau de laquelle est fixé l'élément de centrage, **caractérisé en ce qu'**une bague de maintien (20) est posée sur la section de fixation (11) pour la fixation de l'élément de centrage (12) sur la section de fixation (11), **en ce que** la bague de maintien (20) présente des languettes de fixation (22) inclinées par rapport au fond (5) et en saillie radiale vers l'intérieur au niveau de son orifice annulaire (21), lesdites languettes de fixation agissant sur la section de fixation (11), **en ce qu'**un bec d'égouttage (24) écarté du fond (5) est agencé au niveau de l'élément de centrage (12) et **en ce que** l'élément de centrage (12) s'applique à plat sur la section de fixation (11) avec sa surface périphérique interne (15') et à plat sur la face interne (19') du raccord (1B) avec sa surface périphérique externe (14').

2. Bouchon de fermeture selon la revendication 1, **caractérisé en ce que** l'élément de centrage (12) est réalisé sous forme de bague de centrage et présente une section transversale en forme de U, une branche de profilé de la face interne (19') du raccord (1B) et l'autre branche étant contiguës à la section de fixation (11) et le socle (16) étant placé à distance du fond (5).

3. Bouchon de fermeture selon la revendication 1 ou 2, **caractérisé en ce que** la bague de maintien (20) repose sur le socle (16).

4. Bouchon de fermeture selon l'une quelconque des revendications précédentes, **caractérisé en ce que** la bague de maintien (20) est conçue d'une seule pièce sous la forme d'une pièce de tôle découpée / pliée.

5. Bouchon de fermeture selon l'une quelconque des revendications précédentes, **caractérisé en ce que** la bague de maintien (20) se trouve à l'intérieur du rebord annulaire (17A).

6. Bouchon de fermeture selon la revendication 1, **caractérisé en ce que** la bague de maintien (20) est constituée d'acier à ressort.
